# EUROPÄISCHE PATENTSCHRIFT

(11) **EP 2 861 445 B1**
(45) Veröffentlichungstag und Bekanntmachung des Hinweises auf die Patenterteilung: **10.08.2016**
(21) Anmeldenummer: 13731052.0
(22) Anmeldetag: 10.06.2013
(51) Int. Cl.: B60K 17/08, F16H 37/08

(54) **ÜBERSETZUNGS- UND AUSGLEICHSGETRIEBE SOWIE MOTOR- UND GETRIEBEEINHEIT**
TRANSLATIONAL AND DIFFERENTIAL TRANSMISSION AND MOTOR AND TRANSMISSION UNIT
DÉMULTIPLICATEUR ET DIFFÉRENTIEL ET UNITÉ À MOTORÉDUCTEUR

(30) Priorität: 14.06.2012 DE 102012011686; 14.06.2012 DE 102012011688
(43) Veröffentlichungstag der Anmeldung: 22.04.2015
(73) Patentinhaber: Volkswagen Aktiengesellschaft, 38440 Wolfsburg (DE)
(72) Erfinder: PETERSEN, Rainer, 38444 Wolfsburg (DE); MÖCKEL, Jörg, 38524 Sassenburg (DE); LUTZ, Andreas, 38104 Braunschweig (DE); HANKE, Stefan, 38126 Braunschweig (DE)
(86) Internationale Anmeldenummer: PCT/EP2013/061910
(87) Internationale Veröffentlichungsnummer: WO 2013/186168

(56) Entgegenhaltungen:
- WO-A1-2012/079751
- DE-A1-102008 015 400
- DE-A1-102010 031 746

## Beschreibung

Die Erfindung betrifft ein Übersetzungs- und Ausgleichsgetriebe mit einem Gehäuse, mit einer Eingangswelle und zwei koaxial zu der Eingangswelle angeordneten Ausgangswellen, wobei ein Übersetzungsabschnitt und ein als Stirnraddifferenzial ausgebildeter Ausgleichsabschnitt vorgesehen sind, wobei der Übersetzungsabschnitt zwei Planetenstufen aufweist, nämlich eine Eingangsstufe und eine Laststufe aufweist, wobei das Sonnenrad der Eingangsstufe mit der Eingangswelle wirksam verbunden, wobei die Laststufe eine gehäusefestes Hohlrad aufweist und das Sonnenrad der Laststufe über einen Steg mit mindestens einem Planetenrad der Eingangsstufe wirksam verbindbar ist und wobei mindestens ein Planetenrad der Laststufe über einen Steg mit dem Hohlrad der Eingangsstufe wirksam verbindbar ist. Weiterhin betrifft die Erfindung eine Motor- und Getriebeeinheit mit einem Elektromotor und einem koaxial an dem Elektromotor angeflanschten und zuvor genannten Übersetzungs- und Ausgleichsgetriebe. Übliche Bauformen von Getrieben in Elektro-Fahrzeugen (E-Fahrzeugen) sind an die herkömmlichen Getriebe für die Kopplung mit Verbrennungskraftmotoren angelehnt. Diese Getriebe weisen einen Achsversatz zwischen Eingangs- und Ausgangswelle, also zwischen der Rotorwelle des Elektromotors (E-Motor) und den Radwellen auf. Die Flanschwellen zu den Rädern werden im Wesentlichen achsparallel zu den Antriebsmaschinen (E-Motor bzw. Verbrennungsmotor) an diesen entsprechend vorbeigeführt. Eine Abkopplung der Antriebsmaschine erfolgt hier meist auf die klassische Weise, nämlich durch eine direkt hinter dem E-Motor angeordnete reibschlüssige Kupplung. Diese Ausführung der Abkopplungsvorrichtung wird beispielsweise in der DE 10 2007 043 016 A1 beschrieben. Koaxial zum Elektromotor aufgebaute Planetengetriebe benötigen sehr wenig radialen wie axialen Bauraum und erreichen durch zwei Übersetzungsstufen meist problemlos die geforderte Gesamtübersetzung. Die Anordnung einer Abkopplungsvorrichtung analog zum herkömmlichen Antriebsstrang mit einer reibschlüssigen Kupplung würde aber den Bauraumvorteil der koaxialen Getriebe erheblich mindern.

So ist beispielsweise aus der US-PS 12 19 195 ein Getriebe bekannt, bei dem unterschiedliche Getriebestufen über Planetenstufen realisiert sind. Hierbei sind die beiden Planetenstufen koppelbar bzw. entkoppelbar, wobei die Kopplungsvorrichtung zwischen den beiden Planetenradstufen vorgesehen bzw. ausgebildet ist, wodurch das Getriebe in seiner axialen Länge ein entsprechend langen Bauraumbedarf benötigt.

So ist beispielsweise aus der EP 1 142 743 A2 ein Getriebe bekannt, bei dem innerhalb des Getriebes über schiebemuffenartige Elemente einzelne Gangstufen koppelbar bzw. entkoppelbar sind, wobei das entsprechende Getriebe in einem bestimmten Teilbereich zur Realisierung bestimmter Gangstufen auch Planetenstufen aufweist. Die hier dargestellten Kopplungsvorrichtungen benötigen aber einen entsprechend großen Bauraumbedarf, so dass hierdurch bedingt auch das Getriebe selbst ein entsprechend großer Bauraumbedarf benötigt.

Im Hinblick auf den benötigten Bauraum günstiger, sind sogenannte "Inlinegetriebe" die koaxial an den Antriebsmotor, insbesondere an den Elektromotor anflanschbar sind. In für Elektromotoren typischer Weise liegt die Motorausgangswelle koaxial zu den Motorwicklungen. Das Getriebe wird so an den Motor angeflanscht, dass die Motorausgangswelle koaxial mit der Getriebeeingangswelle verbunden wird. Das Getriebe weist dabei einen Übersetzungsabschnitt, d.h. einen Getriebeteil auf, der die Funktionalität "Übersetzung" realisiert, und einen nachgeschalteten Ausgleichsabschnitt, d.h. einen Getriebeteil, der die Funktionalität "Differential" realisiert. Beide Abschnitte werden vorzugsweise in einem Gehäuse integriert. Beide Differentialausgangswellen sind dabei koaxial zueinander und zu der Eingangswelle sowie zu der Motorausgangswelle ausgerichtet. Dabei durchsetzt eine der Differentialausgangswellen insbesondere die Getriebeeingangswelle sowie die Motorausgangswelle, wobei die beiden letzteren als Hohlwellen ausgebildet sind. Hierbei weist der Übersetzungsabschnitt des so ausgebildeten Getriebes zwei Planetenstufen auf, nämlich eine Eingangsstufe und eine Laststufe, wobei die einzelnen Komponenten der Eingangs- und der Laststufe, die jeweils als Planetenstufen ausgebildet sind, nun in spezifischer Weise miteinander verbunden sind. Insbesondere ist das Sonnenrad der Eingangsstufe mit der Eingangswelle wirksam verbunden, wobei die Laststufe ein gehäusefestes Hohlrad aufweist und deren Sonnenrad, also das Sonnenrad der Laststufe über einen Steg mit mindestens einem Planetenrad (oder den Planetensatz) der Eingangsstufe wirksam verbindbar ist und wobei mindestens ein Planetenrad der Laststufe (oder der Planetensatz) über einen Steg mit dem Hohlrad der Eingangsstufe wirksam verbindbar ist. Dieses so ausgebildete bzw. beschriebene "Inlinegetriebe" soll nun unter Berücksichtigung bestimmter Prämissen weiter verbessert werden.

Der Erfindung liegt daher die Aufgabe zugrunde, dass eingangs genannte Übersetzungs- und Ausgleichsgetriebe so auszugestalten und weiterzubilden, dass eine Kopplungsvorrichtung in dem Getriebe vorgesehen und/oder ausbildbar und/oder so integrierbar ist, dass eine Vergrößerung des Bauraumbedarfs des Getriebes im Wesentlichen vermieden ist, wobei zugleich die Einsatzflexibilität und der Wirkungsgrad des Getriebes verbessert ist.

Gattungsgemäss sind Bauformen aus DE102008015400, DE102010031746 und WO2012079751 bekannt. Die zuvor aufgezeigte Aufgabe wird nun dadurch gelöst, dass eine der Verbindungen zwischen der Eingangsstufe und der Laststufe als schaltbare und die andere als feste Verbindung ausgebildet ist, nämlich dass über eine entsprechend vorgesehene und/oder angeordnete Kopplungsvorrichtung das Hohlrad der Eingangsstufe wirksam mit dem Steg der Laststufe koppelbar bzw. entkoppelbar ist (erste Alternative) oder das Sonnenrad der Laststufe wirksam mit dem Steg der Eingangsstufe koppelbar bzw. entkoppelbar ist (zweite Alternative). Durch die oben beschriebene Positionierung der Kopplungsvorrichtungen zur Kopplung und Entkoppelung der jeweiligen Komponenten können an diesen Positionen die Kopplungsvorrichtungen im wesentlichen bauraumneutral in das Inlinegetriebe bzw. in das den Gegenstand der Anmeldung bildende Getriebe integriert werden, was im Folgenden ausführlich erläutert werden darf. Hierbei erfolgt die Abkopplung bzw. Kopplung der Komponenten mit formschlüssigen Elementen, wodurch wiederum der erforderliche Bauraum erheblich reduziert werden kann. Die erforderliche Synchronisierung dieser hier verwendeten Formschlusselemente wird vom Elektromotor bzw. von dessen Steuerung übernommen. Im Wesentlichen erfolgt das An bzw. Abkoppeln im Normalfall daher völlig lastfrei. Eine Ausnahme hierzu bildet das Abkoppeln in einem Notfall, bei dem sich die Formschlusselemente auch unter der vollen Drehmomentbelastung lösen. Das Hauptziel der hier in das Getriebe integrierten und an den entsprechenden Stellen positionierten Kopplungsvorrichtungen ist die Verbesserung des Gesamtwirkungsgrades des insbesondere elektrischen Antriebes. Dies bedeutet, dass die Kopplungsvorrichtungen im angekoppelten Zustand keine zusätzlichen Verluste, etwa durch benötigte Haltekräfte verursachen, was hier beim Gegenstand der Anmeldung nunmehr entsprechend realisiert wird. Um die Verluste im abgekoppelten Zustand zu minimieren, muss bzw. sollte dabei der Elektromotor komplett stillstehen. Für das Getriebe ergeben sich entsprechend der unterschiedlichen Abkopplungsvarianten unterschiedliche Drehzahlen. Insbesondere ist, wenn der Elektromotor abgekoppelt wird, der Zustand des "Segelns" erwünscht, bei dem keine Verluste generiert werden und wobei das komplette Getriebe nur von den Rädern angetrieben wird und sich lastfrei mitbewegt. Das An- und Abkoppeln erfolgt daher lastfrei, die Relativdrehzahlen werden vom E-Motor vorzugsweise synchronisiert. Insbesondere kann eine Abkopplung auch zur Wirkungsgradverbesserung bei hohen Fahrzeuggeschwindigkeiten, also hohen Raddrehzahlen erfolgen. Vorzugsweise ist zusätzlich, insbesondere zum Abschleppen des Fahrzeuges auch die Möglichkeit der "manuellen Abkopplung" gegeben. Mit Hilfe der so positionierten und ausgebildeten Abkopplungsvorrichtungen werden daher entscheidende Vorteile erzielt und die eingangs beschriebenen Nachteile vermieden.

Es gibt nun eine Vielzahl von Möglichkeiten, das erfindungsgemäße Übersetzungs- und Ausgleichsgetriebe der eingangs genannten Art in vorteilhafter Art und Weise auszugestalten und weiterzubilden, hierfür darf zunächst auf die dem Patentanspruch 1 nachgeordneten Patentansprüche verwiesen werden. Im Folgenden werden nun zwei bevorzuge Ausführungsbeispiele der Erfindung anhand der nachfolgenden Zeichnung und der Beschreibung näher beschrieben. In der Zeichnung zeigt:
- Fig.1: eine schematische Darstellung einer Antriebseinheit eines Kraftfahrzeugs mit einer erfindungsgemäßen Motor- und Getriebeeinheit mit der Darstellung der Positionierung einer - ersten -Abkopplungsvorrichtung in einer ersten Ausführungsform,
- Fig. 2: eine schematische Darstellung einer Antriebseinheit eines Kraftfahrzeuges mit einer erfindungsgemäßen Motor- und Getriebeeinheit mit der Darstellung der Positionierung einer - zweiten - Kopplungsvorrichtung in einer zweiten Ausführungsform,
- Fig. 3: in schematischer Darstellung die Ausbildung und Anordnung der ersten Kopplungsvorrichtung von der Seite,
- Fig. 4a und 4b: die wesentlichen Teilkomponenten in vergrößerter Darstellung der ersten Kopplungsvorrichtung im gekoppelten Zustand (Fig. 4a) und im entkoppelten Zustand (Fig. 4b),
- Fig. 5a und 5b: in schematischer Darstellung die Anordnung und Ausbildung der zweiten Kopplungsvorrichtung von der Seite im gekoppelten Zustand (Fig. 5a) und im entkoppelten Zustand (Fig. 5b),
- Fig. 6: in schematischer perspektivischer Darstellung die wesentlichen Komponenten der zweiten Kopplungsvorrichtung im entkoppelten Zustand.

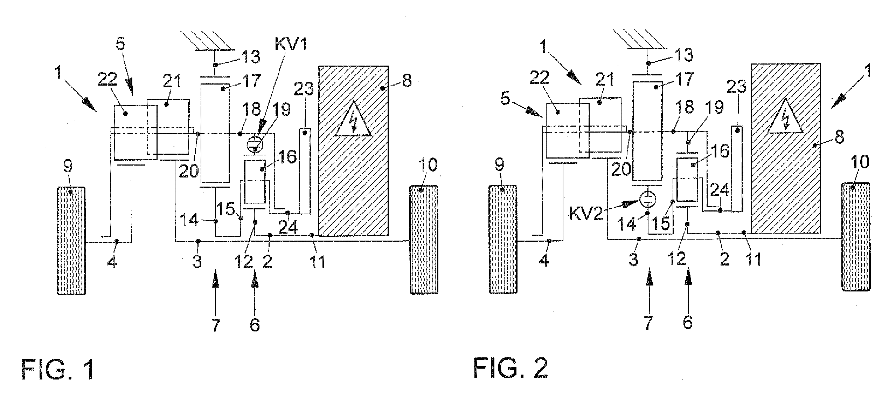

Die Fig. 1 und 2 zeigen zunächst in schematischer Darstellung ein Übersetzungs- und Ausgleichsgetriebe 1 mit einem hier nicht im Einzelnen dargestellten Gehäuse.

Das Übersetzungs- und Ausgleichsgetriebe 1 weist eine Eingangswelle 2 und zwei koaxial zu der Eingangswelle 2 angeordnete Ausgangswellen 3 und 4 auf. Das Übersetzungs- und Ausgleichsgetriebe 1 weist einen Übersetzungsabschnitt und einen als Stirnraddifferential 5 ausgebildeten Ausgleichsabschnitt auf. Der hier nicht näher bezeichnete Übersetzungsabschnitt weist zwei Planetenstufen auf, nämlich eine Eingangsstufe 6 und eine Laststufe 7.

In der hier in Fig. 1 gezeigten üblichen "Halbdarstellung" sind die entsprechenden Elemente des Übersetzungs- und Ausgleichsgetriebes 1 gut erkennbar. In den Fig. 1 und 2 ist daher nur die "obere Hälfte" der an sich rotationssymetrischen Vorrichtung, nämlich der wesentlichen rotierenden Komponenten des Übersetzungs- und Ausgleichgetriebes 1 schematisch dargestellt. Die hier dargestellte Antriebseinheit, nämlich das hier dargestellte Übersetzungs- und Ausgleichsgetriebe 1 dient der Übertragung eines von einem Antriebsmotor, insbesondere einem Elektromotor 8 erzeugten Drehmomentes auf die Abtriebsräder, auf die Räder 9 und 10 einer angetriebenen Achse eines Kraftfahrzeuges.

Die Fig. 1 und 2 zeigen die wesentlichen Komponenten des Übersetzungs- und Ausgleichsgetriebes 1, wobei die Positionierung der Kopplungsvorrichtung KV1 bzw. KV2, auf die im Folgenden noch näher eingegangen wird, nämlich die Positionierung der ersten Kopplungsvorrichtung KV1 in Fig. 1 bzw. der zweiten Kopplungsvorrichtung KV2, also des weiteren Ausführungsbeispiels für eine Kopplungsvorrichtung dann in Fig. 2 jeweils mit einem Kreis symbolisch dargestellt ist. Die Positionierung und/oder die Ausbildung der hier dargestellten Kopplungsvorrichtungen KV1 und KV2 wird aber im Folgenden noch ausführlich erläutert werden. Vorher darf auf die weiteren Komponenten des hier dargestellten Übersetzungs- und Ausgleichsgetriebes 1 noch näher eingegangen bzw. diese im Folgenden noch näher erläutert werden:
Das der Übertragung des Drehmomentes vom Antriebsmotor, hier von dem Elektromotor 8 auf die Räder 9 und 10 dienende Übersetzungs- und Ausgleichsgetriebe 1 setzt sich im Wesentlichen aus drei funktionalen Gruppen zusammen. Es sind dies die Eingangsstufe 6, die Laststufe 7 und eine Ausgleichsstufe, die hier auch als Stirnraddifferential 5 bezeichnet werden kann. Die einzelnen Stufen 6, 7 und 5 sind in der aufgezählten Reinfolge benachbart und kompakt nebeneinander bzw. axial benachbart zueinander angeordnet.

Der Antriebsmotor, hier der Elektromotor 8 weist eine Ausgangswelle 11 auf, die konzentrisch zu dessen nicht näher dargestellten Wicklungen angeordnet ist, insbesondere als Hohlwelle ausgebildet ist. An diese Ausgangswelle 11 schließt sich die ebenfalls als Hohlwelle ausgebildete Eingangswelle 2 des Übersetzungs- und Ausgleichsgetriebes 1 an, beide Komponenten können aber auch als ein integrales Bauteil ausgebildet sein.

Der Übersetzungsabschnitt weist - wie bereits erwähnt - zwei Planetenstufen auf, nämlich die Eingangsstufe 6 und die Laststufe 7. Das Sonnenrad 12 der Eingangsstufe 6 ist mit der Eingangswelle 2 wirksam verbunden, wobei die Laststufe 7 ein gehäusefestes Hohlrad 13 aufweist und das Sonnenrad 14 der Laststufe 7 über einen Steg 15 mit mindestens einem Planetenrad 16, insbesondere mit dem Planetensatz der Eingangsstufe 6 wirksam verbindbar ist. Weiterhin ist mindestens ein Planetenrad 17, insbesondere der Planetensatz der Laststufe 7 über einen Steg 18 mit dem Hohlrad 19 der Eingangsstufe 6 wirksam verbindbar.

Aus den vorstehenden Erläuterungen ergibt sich, dass die Eingangsstufe 6 ein Sonnenrad 12, einen Planetensatz, insbesondere mindestens ein Planetenrad 16 und ein Hohlrad 19 aufweist, wobei die Laststufe 7 ein Sonnenrad 14, einen Planetensatz, insbesondere zumindest ein Planetenrad 17 und ein Hohlrad 13 aufweist, wie dies auch aus den Fig. 1 und 2 ersichtlich ist.

Weiterhin sind die Komponenten teilweise über entsprechende Stege 15 und 18, wie oben beschrieben miteinander wirksam verbunden bzw. verbindbar, was im Folgenden nochmals im Zusammenhang mit den Kopplungsvorrichtungen KV1 bzw. KV2 näher erläutert werden wird.

Die Eingangsstufe 6 und die Laststufe 7 bilden gemeinsam den Übersetzungsabschnitt des Übersetzungs- und Ausgleichsgetriebes 1 mit einer entsprechenden Gesamtübersetzung.

Als Ausgangselement des Übersetzungsabschnitts dient der Steg 20 der Laststufe 7. Über diesen Steg 20 ist der Übersetzungsabschnitt mit dem Stirnraddifferential 5 wirksam verbunden, insbesondere hier mit einem doppelten Satz von Planetenrädern 21 und 22 verbunden, die miteinander kämmen. Über die übliche bekannte Anordnung des Stirnraddifferentials 5 übertragen die Planetenräder 21 und 22 die entsprechende Rotation auf die jeweilige Ausgangswelle 3 bzw. 4 des Übersetzungs- und Ausgleichsgetriebes 1. Hierbei bilden sie Stege 18 und 20 insbesondere einen gemeinsamen Steg oder sind drehfest miteinander gekoppelt.

Wie aus den Fig. 1 und 2 ersichtlich ist hier zusätzlich noch ein Parksperrenrad 23 vorgesehen, zur Realisierung einer Parksperre, wobei das Parksperrenrad 23 über einen entsprechenden Steg 24 mit dem Planetenrad 16 bzw. dem entsprechenden Planetensatz der Eingangsstufe 6 verbunden ist.

Grundsätzlich gilt, damit ein entsprechendes Drehmoment über eine Planetenstufe übertragen werden kann, müssen die entsprechenden Komponenten entsprechend wirksam verbunden sein, d.h. die freie Rotation beispielsweise eines Sonnenrades oder eines Hohlrades würde zu einer Entkopplung der entsprechenden Planetenstufe führen, so dass kein Drehmoment mehr übertragen werden kann.

Die eingangs genannten Nachteile sind nun dadurch vermieden, dass über eine entsprechend vorgesehene oder angeordnete Kopplungsvorrichtung KV1 bzw. KV2 das Hohlrad 19 der Eingangsstufe 6 wirksam mit dem Steg 18 der Laststufe 7 koppelbar bzw. entkoppelbar ist (erste Alternative) oder das Sonnenrad 14 der Laststufe 7 wirksam mit dem Steg 15 der Eingangsstufe 6 koppelbar bzw. entkoppelbar ist (zweite Alternative).

Anders ausgedrückt die Fig. 1 bzw. die Fig. 3, 4a und 4b zeigen eine erste Ausführungsform für eine erste Kopplungsvorrichtung KV1, die so positioniert und/oder ausgebildet ist, dass das Hohlrad 19 der Eingangsstufe 6 vom Steg 18 bzw. vom Planetenrad 17 der Laststufe 7 entkoppelbar bzw. mit diesem Komponenten koppelbar ist.

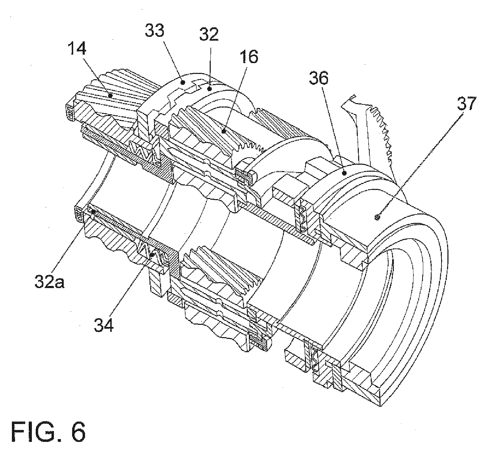

Hingegen zeigen die Fig. 2, 5a, 5b und Fig. 6 eine zweite Ausführungsform für eine zweite Kopplungsvorrichtung KV2, bei der das Sonnenrad 14 der Laststufe 7 vom Steg 15 bzw. vom Planetenrad 16 der Eingangsstufe 6 entkoppelbar bzw. mit diesem Komponenten koppelbar ist.

Bei der Positionierung dieser beiden Kopplungsvorrichtungen KV1 und KV2 muss der Bauraum des Getriebes nicht unnötig vergrößert werden, was die folgenden Ausführungen noch zeigen werden, da die Kopplungsvorrichtungen KV1 bzw. KV2 so ausgebildet werden können, dass die Kopplung bzw. Entkopplung der entsprechenden zuvor beschriebenen Elemente / Komponenten über vorgesehene Formschlusselemente realisiert wird bzw. realisierbar ist, insbesondere daher eine formschlüssige Kopplung realisiert wird, die eben keinen unnötig großen Bauraumbedarf einnimmt, so dass die eingangs beschriebenen Vorteile realisiert werden können.

Auf welche Art und Weise die einzelne Kopplungsvorrichtungen KV1 und KV2 nun ausgebildet sind, dies darf im Folgenden nun näher erläutert werden:
Mit Bezugnahme auf die Fig. 1, 3, 4a und 4b darf nunmehr die Ausbildung der Kopplungsvorrichtung KV1 näher beschrieben werden:
   Die Kopplungsvorrichtung KV1 ist nun so ausgebildet, dass das Hohlrad 19 der Eingangsstufe 6 von dem Steg 18 entkoppelbar bzw. mit dem Steg 18 koppelbar ist. Die Kopplungsvorrichtung KV1 weist hierzu einen Mitnehmerring 25, einen Koppelring 26 und ein Koppelrad 27 auf. Das Hohlrad 19 der Eingangsstufe 6 ist bei dem hier dargestellten Übersetzungs- und Ausgleichsgetriebe 1 mit dem gemeinsamen Steg 18/20 der Laststufe 7 bzw. des Stirnraddifferentials 5 drehfest über die Kopplungsvorrichtung KV1 verbindbar. Hierzu ist zunächst der Mitnehmerring 25 vorgesehen, der mit dem Steg 18 verschweißt ist und insbesondere drehfest verbunden ist.

Der Mitnehmerring 25 kann an seiner inneren Umfangsfläche eine Kontur zur Aufnahme einer spezifischen Lagerkombination 28 aufweisen sowie zu deren radialer und axialer Sicherung, aber auch andere Möglichkeiten sind denkbar. Diese Lagerkombination 28 führt bzw. lagert das abkoppelbare Hohlrad 19 der Eingangsstufe 6. Damit ist das Hohlrad 19 der Eingangsstufe 6 im Fall der entsprechenden Entkopplung frei drehbar zum Steg 18 bzw. zu den Stegen 18/ 20.

Am äußeren Umfang des Mitnehmerringes 25 ist eine Steckverzahnung auf diesen aufgebracht. Der mit dem entsprechenden Gegenstück der Steckverzahnung ausgeführte Koppelring 26 kann axial auf dem Mitnehmerring 25 verschoben werden. Durch die entsprechende Steckverzahnung, die hier nicht näher bezeichnet ist, ist die Drehmomentübertragung vom Mitnehmerring 25 zum Koppelring 26 gewährleistet. Direkt am Hohlrad 19 der Eingangsstufe 6 ist ein Koppelrad 27 befestigt bzw. mit dem Hohlrad 19 drehfest verbunden. Das Koppelrad 27 weist an seinem äußeren Umfang die gleiche Kontur der oben genannten Steckverzahnung auf. Wird nun der Koppelring 26 soweit axial verschoben, dass dieser mit seiner Steckverzahnung über die Verzahnung des Koppelrades 27 gelangt, so ist das Hohlrad 19 angekoppelt.

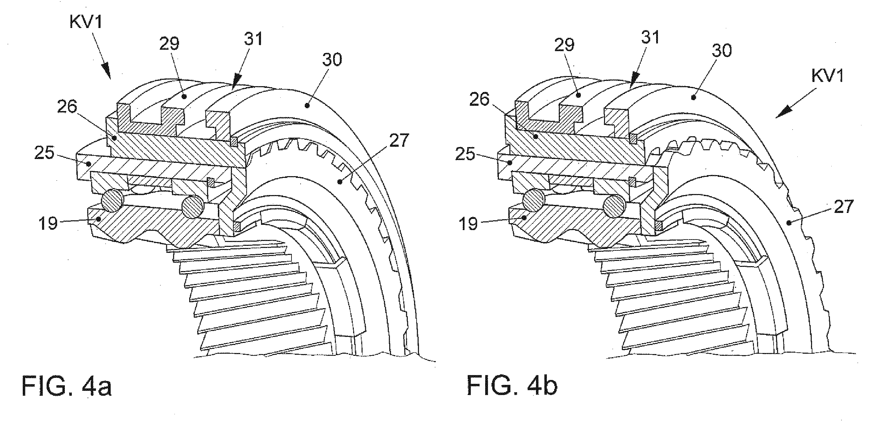

Zum Abkoppeln muss folglich nur der Koppelring 26 aus der Verzahnung des Koppelrades 27 gezogen werden. Damit wird die Drehmomentübertragung vom Hohlrad 19 zum Steg 18 bzw. zu den Stegen 18/20 unterbrochen und das Hohlrad 19 dreht frei in der Lagerkombination 28. Die Axialkraft zum Herausziehen des Koppelringes 26 muss dabei groß genug sein, um die Steckverzahnungen auch bei voller Drehmomentübertragung voneinander lösen zu können. Die Fig. 4a und 4b zeigen nochmals in perspektivischer schematischer Darstellung die in Fig. 4a dargestellte Kopplung bzw. die in Fig. 4b dargestellte Entkopplung des Hohlrades 19. Es ist deutlich ersichtlich, dass zum Ankoppeln der Koppelring 26 wieder über das Koppelrad 27 geschoben wird (vgl. Fig. 4a und 4b). Da dies im Wesentlichen immer lastfrei erfolgen sollte, also ohne eine Drehmomentübertragung zwischen Hohlrad 19 und dem Steg 18 erfolgen soll, ist die benötigte Ankoppelkraft sehr klein. Betätigt, insbesondere axial verschoben, wird der Koppelring 26 durch einen Betätigungsring 29, der zentrisch auf der äußeren Umfangsfläche des Koppelrings 26 sitzt. Die Betätigungskraft kann durch Schaltklauen und einem Hebelmechanismus auf den Betätigungsring 29 geleitet werden. Zwischen dem Betätigungsring 29 und einem vorgesehenen Anschlagring 30 liegen Federelemente 31 bzw. sind, hier nicht im einzelnen dargestellten Federelemente 31 angeordnet. Sollten beim Ankoppeln die Steckverzahnungen vom Koppelring 26 und vom Koppelrad 27 "Zahn auf Zahn" stehen, kann dadurch der Betätigungsring 29 trotzdem in die Stellung "angekoppelt" verschoben werden. Hierzu sind die Federelemente 31 zunächst weiter vorgespannt. Eine geringe Relativverdrehung zwischen Koppelring 26 und Koppelrad 27, die durch die elektronische Synchronisierung vom E-Motor injiziert wird, bringt die Steckverzahnung der beiden Bauteile in eine einrastfähige Position. Der durch die Federelemente 31 in entsprechende Richtung vorgespannte Koppelring 26 schiebt sich automatisch über das Koppelrad 27 und damit ist das Hohlrad 19 angekoppelt.

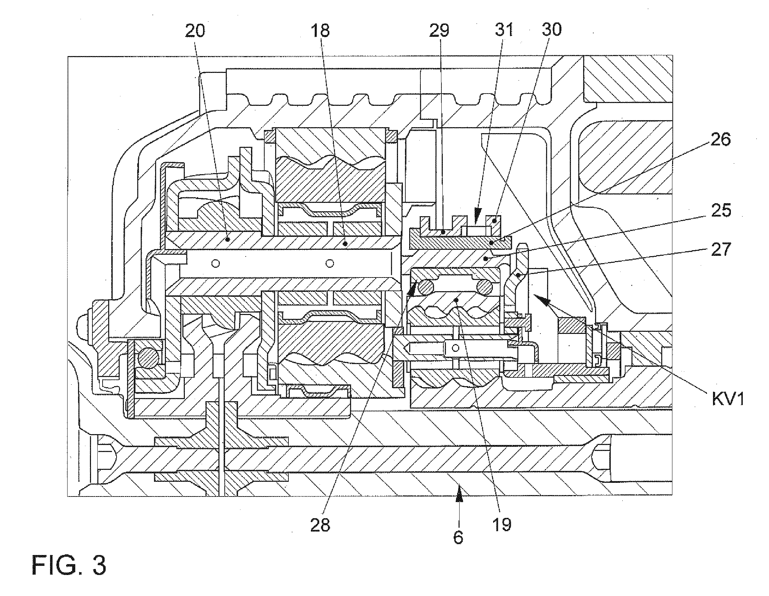

Die einzelnen Komponenten sind in den Fig. 3, 4a und 4b nochmals in entsprechender Weise dargestellt. Gut zu erkennen ist, dass der Mitnehmerring 25 mit dem Steg 18 der Laststufe 6 drehfest verbunden ist, so dass der Koppelring 26 axial auf dem Mitnehmerring 25 verschiebbar angeordnet ist, wobei der Mitnehmerring 25 und der Koppelring 26 jeweils eine miteinander in Eingriff stehende Steckverzahnung aufweisen, die hier nicht näher bezeichnet ist. Das Koppelrad 27 ist drehfest mit dem Hohlrad 19 der Eingangsstufe 6 verbunden und an seinem Außenumfang ist eine zu der Steckverzahnung des Koppelringes 26 korrespondierende Verzahnung vorgesehen. Zur wirksamen Kopplung des Hohlrades 19 mit dem Steg 18 ist der Koppelring 26 über das Koppelrad 27 verschiebbar bzw. verschiebbar angeordnet. Wie bereits oben erwähnt weist die Koppelvorrichtung KV1 zusätzlich den Betätigungsring 29, den Anschlagring 30 und hierzwischen angeordnete vorgespannte Federelemente 31 auf, wobei durch eine entsprechende Vorspannung der Federelemente 31 der Koppelring 26 mit dem Koppelrad 27 in Eingriff bringbar ist.

Im Folgenden darf nun die weitere Ausführungsform, nämlich die Kopplungsvorrichtung KV2 näher erläutert werden. Hierzu darf auf die Figuren 2, 5a, 5b und 6 Bezug genommen werden:
Die Kopplungsvorrichtung KV2 trennt den Leistungspfad zwischen dem Steg 15 der Eingangsstufe 6 und dem Sonnenrad 14 der Laststufe 7. Die hier an dieser Stelle / Position wirksam bzw. angeordnete und hier zumindest teilweise ausgebildete Kopplungsvorrichtung KV2 ist die bevorzugte Ausführungsform, da im angekoppelten Betrieb keine zusätzlichen Verluste generiert werden und im abgekoppelten Betrieb die Verluste auf sehr niedrigen Niveau gehalten werden, weil die Drehzahlen im lastfrei mitlaufenden Getriebe - bei stehender Rotorwelle - sehr klein sind.

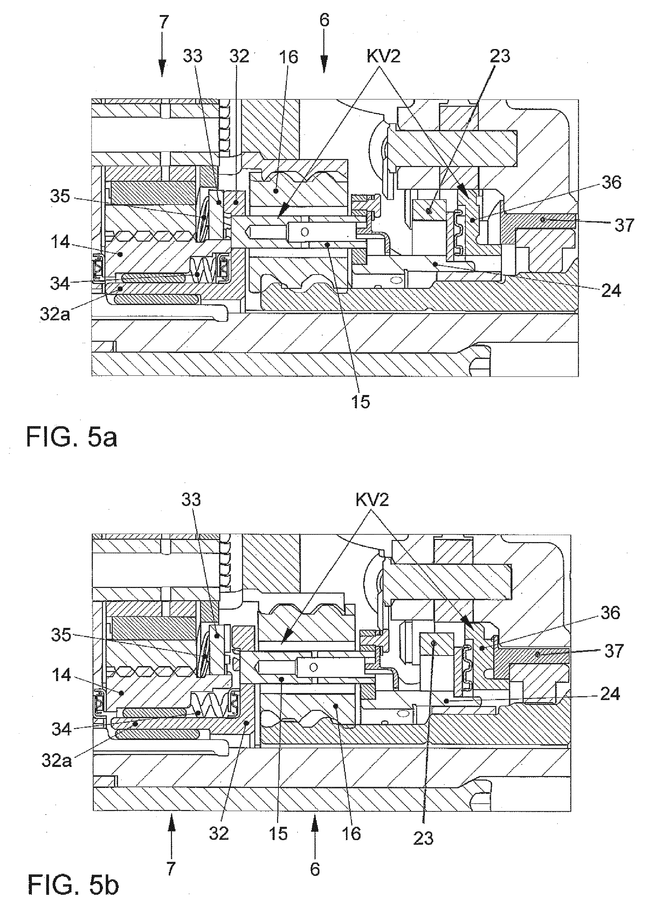

Um eine Abkopplung mit der Kopplungsvorrichtung KV2 in der hier nun beschriebenen Variante zu realisieren, wird nun zunächst das Sonnenrad 14 der Laststufe 7 auf einer Nabe 32a einer Stegplatte 32 radial gelagert. Die Koppelungsvorrichtung KV2 weist nun zunächst die Stegplatte 32 und eine Koppelscheibe 33 auf, die jeweils miteinander in Eingriff bringbar sind, nämlich hierzu nicht näher bezeichnete, entsprechend zueinander korrespondierende Verzahnungen aufweisen. Das Sonnenrad 14 der Laststufe 7 ist nun auf der Nabe 32a der Stegplatte 32 radial gelagert, wobei die Koppelscheibe 33 drehfest mit dem Sonnenrad 14 bzw. mit der Sonne verbunden ist. Axial wird das Sonnenrad 14 zwischen einem Axiallager und einem Tellerfederpaket 34 eingespannt. Das Tellerfederpaket 34 drückt das Sonnenrad 14 und die Stegplatte 32 auseinander (vgl. auch Fig. 5b, wo der entkoppelte Zustand dargestellt wird). Zum Ausgleich der Relativdrehungen im abgekoppelten Zustand ist ein weiteres Axiallager zwischen dem Tellerfederpaket 34 und der Stegplatte 32 angeordnet. Am äußeren Rand weist die Stegplatte 32 eine Stirnverzahnung auf. Das Gegenstück zu dieser Stirnverzahnung ist in die Koppelscheibe 33 eingearbeitet. Die Koppelscheibe 33 ist über eine Steckverzahnungsverbindung mit dem Sonnenrad 14 drehfest verbunden und auch axial verschiebbar mit dem Sonnenrad 14 verbunden. Eine weitere Feder, insbesondere eine Tellerfeder 35 drückt die Koppelscheibe 33 in die durch einen Sicherungsring begrenzte vordere Endposition. Im abgekoppelten Zustand sind beide Stirnverzahnungen der Stegplatte 32 und der Koppelscheibe 33 auseinander gezogen, so dass die Stegplatte 32 und Koppelscheibe 33 bzw. das Sonnenrad 14 sich unabhängig voneinander verdrehen können. Da somit am Sonnenrad 14 kein Drehmoment abgestützt werden kann, ist der Leistungspfad an dieser Stelle unterbrochen.

Im abgekoppelten Zustand ist das Tellerfederpaket 34 nur geringfügig vorgespannt, so dass alle im Kraftfluss liegenden Axiallager nur eine sehr kleine Axialkraft übertragen müssen. Die "Leerlauf- Verluste" des abgekoppelten Getriebes sind entsprechend gering. Die Stegplatte 32 ist Teil des Steges 15 der Eingangsstufe 6, wobei der Steg 15 mit dem Parksperrenrad 23 wirksam verbunden ist, nämlich über eine "Zwischenwelle", die gebildet wird von dem Steg 15 und dem Steg 24. Die axiale Position dieser Zwischenwelle bestimmt, ob das Sonnenrad 14 der Laststufe 7 ab- oder angekoppelt ist.

Vorgegeben wird die axiale Position dieser so gebildeten Zwischenwelle von einer Steuerscheibe 36. Auf der Rückseite der Steuerscheibe 36 ist eine Stirnnockenkontur vorgesehen, die zu einer Stirnnockenkontur der gehäusefesten angrenzenden Lagerhülse 37 gegenläufig ist. Die Vorderseite der Steuerscheibe 36 dient als Laufbahn für das hier nicht näher bezeichnete Axiallager. Im abgekoppelten Zustand liegen die Stirnnockenkonturen von Steuerscheibe 36 und Lagerhülse 37 deckungsgleich übereinander. Um das Sonnenrad 14 wieder anzukoppeln muss die Steuerscheibe 36 gegen die Lagerhülse 37 verdreht werden. Eine Verdrehung der Steuerscheibe 36 führt dazu, dass die Stirnnockenkonturen aufeinander gleiten, bis sich die Nockenberge (ebene Ringsektoren) gegenüberstehen. Die komplette Zwischenwelle, also der Steg 24 und der Steg 15, mit Parksperrenrad 23, mit dem Planetensatz bzw. Planetenrad 16 und folglich auch mit der Stegplatte 32 wird dadurch ins Getriebe hineingeschoben. Die Kopplungsvorrichtung KV2 weist daher zusätzlich die Zwischenwelle, insbesondere bestehend aus dem Steg 15 und dem Steg 24, sowie das Parksperrenrad 23 auf, wobei je nach Stellung der Steuerscheibe 36 die komplette Zwischenwelle mit Parksperrenrad 23, Eingangsstufen-Planetensatz und der Stegplatte 32 in das Getriebe hinein bzw. herausschiebbar ist, nämlich hierdurch die Stegplatte 32 und Kopplungsscheibe 33 koppelbar bzw. entkoppelbar sind.

Durch die axiale Verschiebung, wie oben beschrieben, kommen die Stirnverzahnungen der Stegplatte 32 und der Koppelscheibe 33 in Kontakt und können in günstiger Position sofort einrasten. Der Steg 15 der Eingangsstufe 6, insbesondere die komplette Zwischenwelle erfährt dabei, entsprechend der Größe des Schrägungswinkels der Verzahnung, eine geringfügige Relativverdrehung gegenüber den anderen Verzahnungsteilen der Laststufe 7. Diese geringfügige Relativverdrehung ist hilfreich beim Einrasten der Stirnverzahnungen der Stegplatte 32 und der Koppelscheibe 33. Auch bei dieser Variante wird die Synchrondrehzahl vom Elektromotor angefahren bzw. injeziert. Sollten die Stirnverzahnungen der Komponenten "Zahn auf Zahn" stehen, so wird die Koppelscheibe 33 in ihrer Steckverzahnung zur Verzahnung der Sonne bzw. des Sonnenrades 14 hin verschoben und damit wird gleichzeitig die Tellerfeder 35 weiter vorgespannt. Eine Relativverdrehung zwischen der Koppelscheibe 33 und der Stegplatte 32 führt in diesem Fall zum automatischen Einrasten der Stirnverzahnungen. Gleichzeitig wird durch die axiale Verschiebung das Tellerfederpaket 34 soweit vorgespannt, so dass im Getriebe die für den normalen Betrieb (angekoppelt) erforderliche Vorspannung eingestellt ist. Das entsprechende Axiallager steht im angekoppelten Zustand still. Die Richtung des Steigungswinkels der Verzahnung des Sonnenrades 14 sollte so gewählt werden, dass die axiale Verzahnungskraft für die häufigsten Betriebszustände vom dem entsprechenden Lager aufgenommen wird.

Die zum An- bzw. Abkoppeln benötigte Verdrehung der Steuerscheibe 36 kann über ein Zahnradsegment an der Steuerscheibe 36 von einem elektrischen Aktuator (Stellmotor) eingebracht werden. Um den Wirkungsgradvorteil zu erhalten sollte der Stellmotor "bistabil" arbeiten, d.h. nur im eigentlichen An- oder Abkoppelvorgang bestromt werden.

Schließlich ist aus den Fig. 1 bis 6 gut ersichtlich, dass eine Motor- und Getriebeeinheit realisiert werden kann, mit einem Elektromotor und einem koaxial an den Elektromotor angeflanschten Übersetzungs- und Ausgleichsgetriebe, so wie dieses oben beschrieben wird. Hierbei ist eine Motorausgangswelle des Elektromotors mit der Eingangswelle des Getriebes verbunden und als Hohlwelle ausgebildet, wobei die Hohlwelle von einer der Ausgangswellen des Getriebes koaxial durchsetzt wird, wie hier insbesondere aus den Fig. 1 und 2 ersichtlich, nämlich hier die Ausgangswelle 3 die entsprechenden Wellen 11 und 2 durchsetzt. Mit den so ausgebildeten und angeordneten Kopplungsvorrichtungen KV1 und KV2 sind daher entsprechende Vorteile erzielt.

### Bezugszeichenliste

- 1: Übersetzungs- und Ausgleichsgetriebe
- 2: Eingangswelle
- 3: Ausgangswelle
- 4: Ausgangswelle
- 5: Stirnraddifferential
- 6: Eingangsstufe
- 7: Laststufe
- 8: Antriebsmotor, Elektromotor
- 9: Rad
- 10: Rad
- 11: Ausgangswelle
- 12: Sonnenrad von 6
- 13: Hohlrad von 7
- 14: Sonnenrad von 7
- 15: Steg
- 16: Planetenrad von 6
- 17: Planetenrad von 7
- 18: Steg
- 19: Hohlrad von 6
- 20: Steg
- 21: Planetenrad
- 22: Planetenrad
- 23: Parksperrenrad
- 24: Steg
- 25: Mitnehmerring
- 26: Koppelring
- 27: Koppelrad
- 28: Lagerkombination
- 29: Betätigungsring
- 30: Anschlagring
- 31: Federelement
- 32: Stegplatte
- 32a: Nabe
- 33: Koppelscheibe
- 34: Tellerfederpaket
- 35: Tellerfeder
- 36: Steuerscheibe
- 37: Lagerhülse
- KV1: Kopplungsvorrichtung
- KV2: Kopplungsvorrichtung

## Patentansprüche

1. Übersetzungs- und Ausgleichsgetriebe (1) mit einem Gehäuse, mit einer Eingangswelle (2) und zwei koaxial zu der Eingangswelle (2) angeordneten Ausgangswellen (3, 4,) wobei ein Übersetzungsabschnitt und ein als Stirnraddifferential (5) ausgebildeter Ausgleichsabschnitt vorgesehen sind, wobei der Übersetzungsabschnitt zwei Planetenstufen aufweist, nämlich eine Eingangsstufe (6) und eine Laststufe (7) aufweist, wobei das Sonnenrad (12) der Eingangsstufe (6) mit der Eingangswelle (2) wirksam verbunden ist, wobei die Laststufe (7) ein gehäusefestes Hohlrad (13) aufweist und wobei
- das Sonnenrad (14) der Laststufe (7) über einen Steg (15) mit mindestens einem Planetenrad (16) der Eingangsstufe (6) wirksam verbindbar ist und,
- mindestens ein Planetenrad (17) der Laststufe (7) über einen Steg (18) mit dem Hohlrad (19) der Eingangsstufe (6) wirksam verbindbar ist, **dadurch gekennzeichnet, dass** eine dieser Verbindungen als schaltbare und die andere als feste Verbindung ausgebildet ist, nämlich dass über eine entsprechend vorgesehene und/oder angeordnete Kopplungsvorrichtung (KV1 bzw. KV2) das Hohlrad (19) der Eingangsstufe (6) wirksam mit dem Steg (18) der Laststufe (7) koppelbar bzw. entkoppelbar ist (erste Alternative) oder das Sonnenrad (14) der Laststufe (7) wirksam mit dem Steg (15) der Eingangsstufe (6) koppelbar bzw. entkoppelbar ist (zweite Alternative).

2. Übersetzungs- und Ausgleichsgetriebe nach Anspruch 1, **dadurch gekennzeichnet, dass** die Kopplungsvorrichtung (KV1, KV2) so ausgebildet und/oder ausgeführt ist, dass die Kopplung bzw. Entkopplung der entsprechenden Elemente über vorgesehene Formschlusselemente realisiert wird, insbesondere daher eine formschlüssige Kopplung realisiert wird.

3. Übersetzungs- und Ausgleichsgetriebe nach Anspruch 1 oder 2, **dadurch gekennzeichnet, dass** eine der Ausgangswellen (3, 4) die als Hohlwelle ausgebildete Eingangswelle (2) durchsetzt, wobei mindestens ein Planetenrad (17) der Laststufe (7) über einen Steg (20) mit kämmenden Planetenrädern (21, 22) des Stirnraddifferentials (5) wirksam verbunden ist,

4. Übersetzungs- und Ausgleichsgetriebe nach einem der vorstehenden Ansprüche, **dadurch gekennzeichnet, dass** der Steg (24) der Eingangsstufe (6) mit einem Parksperrenrad (23) verbunden ist, welches mit einer im Gehäuse vorgesehenen Parksperrenvorrichtung in Eingriff steht.

5. Übersetzungs- und Ausgleichsgetriebe nach einem der vorstehenden Ansprüche, **dadurch gekennzeichnet, dass** die Kopplungsvorrichtung (KV1) (für die Kopplung des Hohlrades (19) der Eingangsstufe (6) mit dem Steg (18) der Laststufe (7)) einen Mitnehmerring (25), einen Koppelring (26) und ein Koppelrad (27) aufweist.

6. Übersetzungs- und Ausgleichsgetriebe nach einem der vorstehenden Ansprüche, **dadurch gekennzeichnet, dass** der Mitnehmerring (25) mit dem Steg (18) der Laststufe (6) drehfest verbunden ist, dass der Koppelring (26) axial auf dem Mitnehmerring (25) verschiebbar angeordnet ist und der Mitnehmerring (25) und der Koppelring (26) jeweils eine miteinander in Eingriff stehende Steckverzahnung aufweisen.

7. Übersetzungs- und Ausgleichsgetriebe nach einem der vorstehenden Ansprüche, **dadurch gekennzeichnet, dass** das Koppelrad (27) drehfest mit dem Hohlrad (19) der Eingangsstufe (6) verbunden ist und an seinem Außenumfang eine zu der Steckverzahnung des Koppelringes (26) korrespondierende Verzahnung aufweist.

8. Übersetzungs- und Ausgleichsgetriebe nach einem der vorstehenden Ansprüche, **dadurch gekennzeichnet, dass** zur wirksamen Kopplung des Hohlrades (19) mit dem Steg (18) der Koppelring (26) über das Koppelrad (27) verschiebbar ist.

9. Übersetzungs- und Ausgleichsgetriebe nach einem der vorstehenden Ansprüche, **dadurch gekennzeichnet, dass** die Koppelvorrichtung (KV1) zusätzlich einen Betätigungsring (29), einen Anschlagring (30) und hierzwischen angeordnete, vorgespannte Federelemente (31) aufweist.

10. Übersetzungs- und Ausgleichsgetriebe nach einem der vorstehenden Ansprüche, **dadurch gekennzeichnet, dass** durch eine entsprechende Vorspannung der Federelemente (31) der Koppelring (26) mit dem Koppelrad (27) automatisch in Eingriff bringbar ist.

11. Übersetzungs- und Ausgleichsgetriebe nach einem der vorstehenden Ansprüche, **dadurch gekennzeichnet, dass** die Kopplungsvorrichtung (KV2) (für die Kopplung des Sonnenrades (14) der Laststufe (7) mit dem Steg (15) der Eingangsstufe (6)) eine Koppelscheibe (33) und eine Stegplatte (32) aufweist, die jeweils miteinander in Eingriff bringbare Verzahnungen aufweisen.

12. Übersetzungs- und Ausgleichsgetriebe nach einem der vorstehenden Ansprüche, **dadurch gekennzeichnet, dass** das Sonnenrad (14) der Laststufe (7) auf der Nabe (32a) der Stegplatte (32) radial gelagert ist, wobei die Koppelscheibe (33) drehfest mit dem Sonnenrad (14) verbunden ist.

13. Übersetzungs- und Ausgleichsgetriebe nach einem der vorstehenden Ansprüche, **dadurch gekennzeichnet, dass** ein Tellerfederpaket (34) vorgesehen und so angeordnet ist, dass Koppelscheibe (33) und Stegplatte (32) auseinander gedrückt werden.

14. Übersetzungs- und Ausgleichsgetriebe nach einem der vorstehenden Ansprüche, **dadurch gekennzeichnet, dass** die Kopplungsvorrichtung (KV2) zusätzlich auch eine aus den Stegen (15) und (24) gebildete Zwischenwelle umfasst und dass eine Steuerscheibe (36) mit einer Stirnnockenkontur vorgesehen ist, wobei je nach Stellung der Steuerscheibe (36) die komplette Zwischenwelle mit Eingangsstufen-Planetensatz (16) und der Stegplatte (32) in das Getriebe hinein bzw. herausschiebbar ist, nämlich hierdurch Stegplatte (32) und Kopplungscheibe (33) koppelbar bzw. entkoppelbar sind.

15. Übersetzungs- und Ausgleichsgetriebe nach Ansprüche 4 und 14, **dadurch gekennzeichnet, dass** das Parksperrenrad (23) an dem der Steuerscheibe (36) zugewandten Ende des Stegs (24) angeordnet ist.

16. Motor- und Getriebeeinheit (1) mit einem Elektromotor (8) und einem koaxial an den Elektromotor (8) angeflanschten Übersetzungs- und Ausgleichsgetriebe (1) nach einem der vorstehenden Ansprüche, wobei eine Motorausgangswelle (11) des Elektromotors (8) mit der Eingangswelle (2) des Getriebes verbunden und als Hohlwelle ausgebildet ist, und wobei die Motorausgangswelle (11) von einer der Ausgangswellen (3,4) des Getriebes (1) koaxial durchsetzt wird.

## Claims

1. Speed-changing and differential transmission (1) having a housing, having an input shaft (2) and two output shafts (3, 4), arranged coaxially with the input shaft (2), wherein a speed-changing section and a differential section designed as a spur wheel differential (5) are provided, wherein the speed-changing section has two planetary stages, namely an input stage (6) and a load stage (7), wherein the sun wheel (12) of the input stage (6) is operatively connected to the input shaft (2), wherein the load stage (7) has an annulus (13) fixed in relation to the housing, and wherein
- the sun wheel (14) of the load stage (7) can be operatively connected to at least one planet wheel (16) of the input stage (6) by means of a planet carrier (15) and
- at least one planet wheel (17) of the load stage (7) can be operatively connected to the annulus (19) of the input stage (6) by means of a planet carrier (18), **characterized in that** one of said connections is designed as a selectable connection and the other is designed as a fixed connection, namely that, by means of an appropriately provided and/or arranged coupling device (KV1 and KV2), the annulus (19) of the input stage (6) can be operatively coupled to and decoupled from the planet carrier (18) of the load stage (7) (first alternative), or the sun wheel (14) of the load stage (7) can be operatively coupled to and decoupled from the planet carrier (15) of the input stage (6) (second alternative).

2. Speed-changing and differential transmission according to Claim 1, **characterized in that** the coupling device (KV1, KV2) is designed and/or embodied in such a way that the coupling or decoupling of the corresponding elements is achieved by means of positive engagement elements that are provided and, in particular, positive coupling is therefore achieved.

3. Speed-changing and differential transmission according to Claim 1 or 2, **characterized in that** one of the output shafts (3, 4) passes through the input shaft (2), which is designed as a hollow shaft, wherein at least one planet wheel (17) of the load stage (7) is operatively connected to meshing planet wheels (21, 22) of the spur wheel differential (5) by means of a planet carrier (20).

4. Speed-changing and differential transmission according to one of the preceding claims, **characterized in that** the planet carrier (24) of the input stage (6) is connected to a parking lock wheel (23), which is in engagement with a parking lock device provided in the housing.

5. Speed-changing and differential transmission according to one of the preceding claims, **characterized in that** the coupling device (KV1) (for coupling the annulus (19) of the input stage (6) to the planet carrier (18) of the load stage (7)) has a driver ring (25), a coupling ring (26) and a coupling wheel (27).

6. Speed-changing and differential transmission according to one of the preceding claims, **characterized in that** the driver ring (25) is connected for conjoint rotation to the planet carrier (18) of the load stage (6), **in that** the coupling ring (26) is arranged in such a way as to be movable axially on the driver ring (25), and the driver ring (25) and the coupling ring (26) each have an inter-engaging set of splines.

7. Speed-changing and differential transmission according to one of the preceding claims, **characterized in that** the coupling wheel (27) is connected for conjoint rotation to the annulus (19) of the input stage (6) and has on its outer circumference a set of teeth corresponding to the set of splines of the coupling ring (26).

8. Speed-changing and differential transmission according to one of the preceding claims, **characterized in that** the coupling ring (26) can be moved over the coupling wheel (27) to couple the annulus (19) operatively to the planet carrier (18).

9. Speed-changing and differential transmission according to one of the preceding claims, **characterized in that** the coupling device (KV1) additionally has an actuating ring (29), a stop ring (30) and preloaded spring elements (31) arranged therebetween.

10. Speed-changing and differential transmission according to one of the preceding claims, **characterized in that** the coupling ring (26) and the coupling wheel (27) can be brought automatically into engagement through appropriate preloading of the spring elements (31).

11. Speed-changing and differential transmission according to one of the preceding claims, **characterized in that** the coupling device (KV2) (for coupling the sun wheel (14) of the load stage (7) to the planet carrier (15) of the input stage (6)) has a coupling disk (33) and a planet carrier plate (32), which each have sets of teeth that can be brought into engagement with one another.

12. Speed-changing and differential transmission according to one of the preceding claims, **characterized in that** the sun wheel (14) of the load stage (7) is supported radially on the hub (32a) of the planet carrier plate (32), wherein the coupling disk (33) is connected for conjoint rotation to the sun wheel (14).

13. Speed-changing and differential transmission according to one of the preceding claims, **characterized in that** a diaphragm spring pack (34) is provided and arranged in such a way that the coupling disk (33) and the planet carrier plate (32) are pushed apart.

14. Speed-changing and differential transmission according to one of the preceding claims, **characterized in that** the coupling device (KV2) additionally also comprises an intermediate shaft formed by the planet carriers (15) and (24) and **in that** a control disk (36) is provided with a face cam contour, wherein, depending on the position of the control disk (36), the entire intermediate shaft with the input-stage planetary set (16) and the planet carrier plate (32) can be pushed into and out of the transmission, i.e. the planet carrier plate (32) and the coupling disk (33) can thereby be coupled or decoupled.

15. Speed-changing and differential transmission according to Claims 4 and 14, **characterized in that** the parking lock wheel (23) is arranged at the end of the planet carrier (24) facing the control disk (36).

16. Motor and transmission unit (1), having an electric motor (8) and a speed-changing and differential transmission (1) according to one of the preceding claims flanged coaxially to the electric motor (8), wherein a motor output shaft (11) of the electric motor (8) is connected to the input shaft (2) of the transmission and is designed as a hollow shaft, and wherein one of the output shafts (3, 4) of the transmission (1) passes coaxially through the motor output shaft (11).

## Revendications

1. Démultiplicateur et différentiel (1) avec un carter, avec un arbre d'entrée (2) et deux arbres de sortie (3, 4) agencés coaxialement à l'arbre d'entrée (2), dans lequel il est prévu une partie démultiplicateur et une partie différentiel réalisée sous forme de différentiel droit (5), dans lequel la partie démultiplicateur présente deux étages de satellites, à savoir un étage d'entrée (6) et un étage de charge (7), dans lequel la roue solaire (12) de l'étage d'entrée (6) est reliée activement à l'arbre d'entrée (2), dans lequel l'étage de charge (7) présente une couronne creuse (13) solidaire du carter et dans lequel
- la roue solaire (14) de l'étage de charge (7) peut être activement reliée à au moins une roue satellite (16) de l'étage d'entrée (6) au moyen d'une nervure (15), et
- au moins une roue satellite (17) de l'étage de charge (7) peut être activement reliée à la couronne creuse (19) au moyen d'une nervure (18),
**caractérisé en ce qu'**une de ces liaisons est réalisée sous forme de liaison commutable et l'autre sous forme de liaison fixe, à savoir que, au moyen d'un dispositif de couplage prévu et/ou disposé de façon correspondante (KV1 ou KV2), la couronne creuse (19) de l'étage d'entrée (6) peut être activement couplée à ou découplée de la nervure (18) de l'étage de charge (7) (première alternative) ou la roue solaire (14) de l'étage de charge (7) peut être activement couplée à ou découplée de la nervure (15) de l'étage d'entrée (6) (deuxième alternative).

2. Démultiplicateur et différentiel selon la revendication 1, **caractérisé en ce que** le dispositif de couplage (KV1, KV2) est conçu et/ou réalisé de telle manière que le couplage ou le découplage des éléments correspondants soit réalisé au moyen d'éléments d'emboîtement prévus, en particulier qu'un couplage par emboîtement soit dès lors réalisé.

3. Démultiplicateur et différentiel selon la revendication 1 ou 2, **caractérisé en ce qu'**un des arbres d'entrée (3, 4) traverse l'arbre d'entrée (2) réalisé sous forme d'arbre creux, dans lequel au moins une roue satellite (17) de l'étage de charge (7) est activement reliée au moyen d'une nervure (20) à des roues satellites en prise (21, 22) du différentiel droit (5).

4. Démultiplicateur et différentiel selon l'une quelconque des revendications précédentes, **caractérisé en ce que** la nervure (24) de l'étage d'entrée (6) est reliée à une roue de blocage de stationnement (23), qui est en prise avec un dispositif de blocage de stationnement prévu dans le carter.

5. Démultiplicateur et différentiel selon l'une quelconque des revendications précédentes, **caractérisé en ce que** le dispositif de couplage (KV1) (pour le couplage de la couronne creuse (19) de l'étage d'entrée (6) à la nervure (18) de l'étage de charge (7)) présente un anneau d'entraînement (25), un anneau de couplage (26) et une roue de couplage (27).

6. Démultiplicateur et différentiel selon l'une quelconque des revendications précédentes, **caractérisé en ce que** l'anneau d'entraînement (25) est assemblé de façon solidaire en rotation à la nervure (18) de l'étage de charge (6), **en ce que** l'anneau de couplage (26) est disposé de façon déplaçable axialement sur l'anneau d'entraînement (25) et l'anneau d'entraînement (25) et l'anneau de couplage (26) présentent respectivement une denture engagée en prise l'une avec l'autre.

7. Démultiplicateur et différentiel selon l'une quelconque des revendications précédentes, **caractérisé en ce que** la roue de couplage (27) est assemblée de façon solidaire en rotation avec la couronne creuse (19) de l'étage d'entrée (6) et présente à sa périphérie extérieure une denture correspondant à la denture engagée de l'anneau de couplage (26).

8. Démultiplicateur et différentiel selon l'une quelconque des revendications précédentes, **caractérisé en ce que** l'anneau de couplage (26) est déplaçable au-dessus de la roue de couplage (27) pour le couplage actif de la couronne creuse (19) avec la nervure (18).

9. Démultiplicateur et différentiel selon l'une quelconque des revendications précédentes, **caractérisé en ce que** le dispositif de couplage (KV1) présente en plus un anneau d'actionnement (29), un anneau de butée (30) et des éléments de ressort précontraints (31) agencés entre ceux-ci.

10. Démultiplicateur et différentiel selon l'une quelconque des revendications précédentes, **caractérisé en ce que** l'anneau de couplage (26) peut être amené automatiquement en prise avec la roue de couplage (27) par une précontrainte correspondante des éléments de ressort (31).

11. Démultiplicateur et différentiel selon l'une quelconque des revendications précédentes, **caractérisé en ce que** le dispositif de couplage (KV2) (pour le couplage de la roue solaire (14) de l'étage de charge (7) avec la nervure (15) de l'étage d'entrée (6)) présente un disque de couplage (33) et une plaque à nervures (32), qui présentent respectivement des dentures pouvant être mises en prise l'une avec l'autre.

12. Démultiplicateur et différentiel selon l'une quelconque des revendications précédentes, **caractérisé en ce que** la roue solaire (14) de l'étage de charge (7) est montée radialement sur le moyeu (32a) de la plaque à nervures (32), dans lequel le disque de couplage (33) est assemblé de façon solidaire en rotation à la roue solaire (14).

13. Démultiplicateur et différentiel selon l'une quelconque des revendications précédentes, **caractérisé en ce qu'**il est prévu un paquet de rondelles élastiques (34), qui est disposé de telle manière que le disque de couplage (33) et la plaque à nervures (32) soient repoussés à l'écart l'un de l'autre.

14. Démultiplicateur et différentiel selon l'une quelconque des revendications précédentes, **caractérisé en ce que** le dispositif de couplage (KV2) comprend en outre aussi un arbre intermédiaire formé entre les nervures (15) et (24) et **en ce qu'**il est prévu un disque de commande (36) avec un contour de came droite, dans lequel, selon la position du disque de commande (36), l'arbre intermédiaire complet avec l'ensemble des satellites de l'étage d'entrée (16) et la plaque à nervures (32) peut être déplacé dans et hors de la transmission, à savoir que la plaque à nervures (32) et le disque de couplage (33) peuvent être couplés et découplés de cette manière.

15. Démultiplicateur et différentiel selon les revendications 4 et 14, **caractérisé en ce que** la roue de blocage de stationnement (23) est disposée sur le côté de la nervure (24) tournée vers le disque de commande (36).

16. Unité de moteur et de transmission (1) avec un moteur électrique (8) et un démultiplicateur et différentiel (1) selon l'une quelconque des revendications précédentes bridé coaxialement au moteur électrique (8), dans laquelle un arbre de sortie de moteur (11) du moteur électrique (8) est relié à l'arbre d'entrée (2) de la transmission et est réalisé sous forme d'arbre creux, et dans laquelle l'arbre de sortie de moteur (11) est traversé coaxialement par un des arbres de sortie (3, 4) de la transmission (1).
